# EUROPÄISCHE PATENTSCHRIFT

(11) **EP 1 854 749 B1**
(45) Veröffentlichungstag und Bekanntmachung des Hinweises auf die Patenterteilung: **16.12.2009**
(21) Anmeldenummer: 06009853.0
(22) Anmeldetag: 12.05.2006
(51) Int. Cl.: B65G 47/30

(54) **Vorrichtung zum Vereinzeln im Wesentlichen quaderförmiger Stückgüter**
Device for singulating essentially cuboid piece goods
Dispositif pour séparer des marchandises de détail sensiblement parallélépipédiques

(43) Veröffentlichungstag der Anmeldung: 14.11.2007
(73) Patentinhaber: von Liechtenstein, Alexander, 9497 Triesenberg (LI)
(72) Erfinder: von Liechtenstein, Alexander, 9497 Triesenberg (LI)
(74) Vertreter: Grünecker, Kinkeldey, Stockmair & Schwanhäusser Anwaltssozietät

(56) Entgegenhaltungen:
- EP-A- 0 181 792
- DE-B- 1 175 604

## Beschreibung

Die vorliegende Erfindung bezieht sich auf eine Vorrichtung zum Vereinzeln im Wesentlichen quaderförmiger Stückgüter gemäß des Oberbegriffs des Anspruchs 1.

Eine derartige Vorrichtung ist aus der DE 10 2004 012 133 A1 bekannt. Die Stückgüter werden in einer Annahmestation auf einem Förderer angeordnet, so dass der Förderer ein oder mehrere Stückgüter über eine Endkante des Förderers hinaustransportiert. Die Stückgüter treffen dann auf eine Ablagefläche und werden von einem Sensor erfasst und von einer zugreifenden Transporteinrichtung weitertransportiert. Erst wenn alle Stückgüter von der Ablagefläche entnommen wurden, transportiert der Förderer die nächsten Stückgüter über die Endkante auf die Ablagefläche. Nachteilig an der bekannten Vereinzelungsvorrichtung ist, dass diese Vereinzelung nur sequentiell abläuft und somit zeitintensiv ist. Des Weiteren wird keine strikte Vereinzelung vorgenommen, sondern vielmehr eine Vielzahl von Stückgütern über die Endkante auf eine Ablagefläche transportiert. Dann werden die Stückgüter einzeln von einer Transporteinrichtung weitertransportiert. Erst wenn alle Stückgüter weitertransportiert wurden und die Ablagefläche frei ist, transportiert der Förderer die nächsten Stückgüter über die Endkante auf die Ablagefläche.

Das Dokument EP 0181 792 offenbart eine Vorrichtung zum Transportieren von Stückgütern mit einer Annahmestation, einem ersten Förderer, auf welchem ein Annahmevolumen von Stückgütern gebildet ist. Die Stückgüter werden entlang einer Ebene des Förderers über eine Endkante des Förderers hinaustransportiert und gelangen auf einen zweiten Förderer. Dieser Förderer weist Mitnehmer auf, auf denen jeweils die Stückgüter während des Fördervorgangs angeordnet sind. Hier können mehrere Stückgüter nebeneinander auf einem Mitnehmer liegen und gleichzeitig über die Endkante hinaus transportiert werden.

Die Druckschrift DE 1 175 604 offenbart eine Vorrichtung zum Entnehmen und Fördern von Stückgütern, die in einer Annahmestation gelagert sind. Mehrere Stückgüter können auf schräg an einem Förderband angeordneten Mitnehmern angeordnet sein. Die auf den Mitnehmern positionierten Stückgüter verlassen über eine Rutsche am seitlichen Bereich des Förderers die Vorrichtung. Die auf dem Mitnehmer geförderten Stückgüter werden jeweils im Block auf der Rutsche weitergeleitet und somit nicht vereinzelt.

Aufgabe der vorliegenden Erfindung ist es, die bekannten Vorrichtungen zum Vereinzeln von Stückgütern dahingehend zu verbessern, dass die Vereinzelung und somit die Einlagerung der Stückgüter zuverlässiger und schneller abläuft und darüber hinaus die Vorrichtungsanordnung platzsparender ist.

Diese Aufgabe wird gelöst durch eine Vorrichtung mit den Merkmalen des Anspruchs 1.

Von dem Konzept der herkömmlichen Vorrichtung unterscheidet sich die vorliegende Erfindung grundlegend, indem sie die Stückgüter bei deren Transport über zwei Förderer zuverlässig vereinzelt. Die Stückgüter treten nach der Annahmestation über die Endkante des ersten Förderers und gelangen zu einem zweiten Förderer, der zum einen platzsparend in einem Winkel zu dem ersten Förderer angeordnet ist und des Weiteren schräg zu seiner Förderrichtung angeordnete Mitnehmer aufweist, die eine sehr zuverlässige Vereinzelung der Stückgüter verursachen. Die von oben betrachtet schräg angeordneten Mitnehmer in Förderrichtung des zweiten Förderers erlauben es nur jeweils einem Stückgut über die Endkante des Förderers zu treten. Ein von dem ersten Förderer auf den zweiten Förderer transportiertes zweites Stückgut kommt auf Grund der schrägen Anordnung der Mitnehmer mit einem Abstand zu dem ersten Stückgut auf dem Mitnehmer zum Liegen. Wenn der zweite Förderer die Stückgüter in der Förderrichtung transportiert, tritt zuerst das Stückgut über die Endkante, welches auf dem Mitnehmer die höchste bzw. vorderste Position eingenommen hat. Somit kann eine strikte Vereinzelung zuverlässig gewährleistet werden.

Ein Vorteil der Erfindung liegt darin, dass ein kontinuierlicher Einlagerungsprozess ohne gravierende zeitliche Unterbrechungen stattfinden kann. Während das von dem zweiten Förderer vereinzelte Stückgut weitertransportiert wird, liefert der erste Förderer bereits vorab zu vereinzelnde Stückgüter auf das zweite Förderband. Da dieser optimierte Vereinzelungsvorgang auch in einer platzsparenden Vorrichtung vorgesehen ist, kann der Verfahrensablauf beschleunigt, die Bedienfrequenz der Annahmestation gesteigert, die Lagerkosten gesenkt und der Weitertransport der vereinzelten Stückgüter beschleunigt werden.

Vorteilhaft ist es, wenn die Mitnehmer rechteckige Querschnitte aufweisen. Somit entstehen ausreichend große Aufnahmeflächen sowohl für zylindrische, als auch für quaderförmige Stückgüter.

Günstig ist es, wenn die Mitnehmer in einem Winkel zwischen 20° und 70° und bevorzugt in einem Winkel von etwa 30° zur Förderrichtung des zweiten Förderers angeordnet sind. Bei dieser Winkelstellung gleiten die Stückgüter besonders einfach auf die Aufnahmeflächen der Mitnehmer.

Der zweite Förderer ist vorzugsweise annähernd höhengleich zu dem ersten Förderer angeordnet. Aber besonders vorteilhaft ist es, wenn der zweite Förderer eine Höhendifferenz zu dem ersten Förderer aufweist. Auf diese Weise kann sichergestellt werden, dass alle Stückgüter von dem ersten Förderer auf den zweiten Förderer übertreten. Gleichzeitig kann bei der Überwindung der Höhendifferenz über eine Rutsche oder durch den freien Fall eine Orientierung der Stückgüter auf deren Schwerpunkt erfolgen. Die nachfolgende Handhabung wird dadurch verbessert, da ein Verrutschen der Stückgüter auf dem zweiten Förderer auf Grund eines ungünstig positionierten Schwerpunkts der Stückgüter vermieden wird. Denkbar ist es, dass zwischen dem ersten Förderer und dem zweiten Förderer wenigstens ein weiterer Förderer funktionell eingefügt ist. Durch diesen zusätzlichen Förderer wird eine Vereinzelungsstufe eingefügt, die den Gesamtablauf der Vereinzelung weiter optimiert.

Vorteilhafterweise ist die Förderrichtung des zweiten Förderers in einem Winkel von 0° bis 150° oder 30° bis 150° und bevorzugt in einem Winkel von etwa 90° zu der Förderrichtung des ersten Förderers angeordnet. Mit dieser Anordnung wird eine platzsparende Aufstellung der Vereinzelungsvorrichtung und eine zusätzliche Änderung der Orientierung der Stückgüter erreicht. Des Weiteren werden zwei oder mehrere nebeneinander über die Endkante des ersten Förderers tretende Stückgüter in der Förderrichtung des zweiten Förderers hintereinander angeordnet.

Es hat sich als sehr vorteilhaft erwiesen, wenn ein Aufnahmebereich für die vereinzelten Stückgüter funktionell nach dem zweiten Förderer angeordnet ist. Während die zur Einlagerung der Stückgüter notwendige Korrektur der Orientierung ab diesem Aufnahmebereich vorgenommen wird, können die funktionell vorgelagerten Förderer bereits die weitere Vereinzelung der noch in der Annahmestation befindlichen Stückgüter vornehmen. Günstig ist es, wenn der Aufnahmebereich ein Förderband umfasst, dessen Förderrichtung kollinear zu der Förderrichtung des zweiten Förderers gerichtet ist. Dann kann ein Anschlag an dem Ende des Förderbandes senkrecht zu dessen Förderrichtung angebracht werden, der durch die stetige Bewegung des Förderbandes die darauf befindlichen Stückgüter an dem Anschlag ausrichtet. Die Stückgüter erhalten somit eine ausgerichtete Position, die für die weitere Handhabung der Stückgüter vorteilhaft ist.

Bei einer vorteilhaften Ausführungsform der Erfindung ist ein erster schwenkbarer Arm senkrecht zur Förderrichtung des Förderbands des Aufnahmebereichs verfahrbar. Der Arm ist zwischen einer senkrechten und einer waagerechten Stellung schwenkbar, damit er sowohl in der waagerechten Stellung die Oberfläche des Förderbands abtastet als auch in der senkrechten Stellung den Aufnahmebereich des Förderbands freigibt. Somit kann der schwenkbare Arm entweder die auf dem Förderband des Aufnahmebereichs befindlichen Stückgüter erfassen oder auch verfahren werden, ohne die Stückgüter zu berühren.

In einer besonders vorteilhaften Ausführungsform der Erfindung erfasst ein Sensor den Aufnahmebereich des Förderbandes. Dieser Sensor kann z.B. eine Kamera sein, welche die Anzahl der Stückgüter und deren Orientierung und/oder Dimensionen in dem Aufnahmebereich erfasst. Mit Hilfe der von diesem Sensor erfassten Daten können die weiteren Handhabungsschritte für das Erreichen der Einlagerungsposition der Stückgüter eingeleitet werden. Des Weiteren können durch den optischen Sensor auch beschädigt Stückgüter erkannt und deren Aussortieren aus dem Einlagerungsprozess eingeleitet werden.

In einem günstigen Ausführungsbeispiel der Erfindung kann eine Identifizierungseinheit für die Identifizierung der Stückgüter funktionell nach dem Aufnahmebereich angeordnet sein, wobei die Identifizierungseinheit in einem Winkel von 30° bis 150° und bevorzugt in einem Winkel von 90° zu der Förderrichtung des Aufnahmebereichs angeordnet ist. Die bereits in dem Aufnahmebereich rechtwinklig positionierten Stückgüter können nun in der Identifizierungseinheit besonders gut weiterverarbeitet werden. Besonders günstig ist es, wenn die Identifizierungseinheit eine ebene Glasplatte aufweist, welche mit dem Aufnahmebereich in etwa höhengleich angeordnet ist. Somit können die Stückgüter mit dem schwenkbaren Arm von dem Aufnahmebereich auf die ebene Glasplatte geschoben werden. Die Glasplatte ermöglicht es, dass alle äußeren Flächen der Stückgüter visuell sichtbar sind.

In einem günstigen Ausführungsbeispiel der Erfindung ist mindestens ein Sensor im Bereich der Identifizierungseinheit vorgesehen, wobei der Sensor bevorzugt ein optischer Sensor zur Erfassung eines auf den Stückgütern aufgebrachten Strichcodes ist. Da je nach Ausführung der Stückgüter ein oder mehrere Sensoren eingesetzt werden können, ist der auf den Stückgütern aufgebrachte Strichcode oder sonstige Kennzeichnungen in jeder Position erfassbar. Somit wird eine zuverlässige Identifizierung der Stückgüter gewährleistet.

Besonders günstig ist es, wenn ein zweiter schwenkbarer Arm für die Verlagerung der Stückgüter auf der Glasplatte vorgesehen ist. Insbesondere wenn der schwenkbare Arm kollinear zu dem ersten schwenkbaren Arm verfahrbar ist, können die Stückgüter von einem schwenkbaren Arm an den anderen schwenkbaren Arm übergeben werden. Der integrative Einsatz der beiden schwenkbaren Arme stellt einen besonderen zeitlichen Vorteil dar. Es kann sowohl ein Arm ein Stückgut an den anderen Arm weitergeben oder beide Arme gleichzeitig jeweils ein Stückgut verfahren. Damit steigt die Effizienz des Einlagerungsvorgangs.

In einer besonders vorteilhaften Ausführungsform der Erfindung ist ein drehbarer Aufnahmebereich funktionell nach der Identifizierungseinheit angeordnet. Wenn die Identifizierungseinheit keinen seitlich auf dem Stückgut angebrachten Strichcode erfassen konnte, da der Strichcode nicht auf der dem Sensor zugewandten Fläche des Stückguts angebracht ist, kann der drehbare Aufnahmebereich das Stückgut um einen beliebigen Winkel zwischen 0° und 360° drehen. Ein weiterer Sensor, der seitlich vom Bereich der oberen Aufnahmefläche der runden Plattform angebracht ist, kann während dieser Drehung des Stückguts alle in seinem Abtastbereich liegenden Flächen erfassen und somit auch die in den vorherigen Schritten eventuell nicht erkannten Strichcodes lesen. Somit wird die Identifizierung der Stückgüter sichergestellt.

Der drehbare Aufnahmebereich weist in einer bevorzugten Ausführungsform eine runde Plattform auf, die insbesondere aus Aluminium besteht, wodurch ein kostengünstiges Bauteil mit geringem Gewicht zur Verfügung gestellt werden kann.

Vorteilhafterweise ist ein dritter Schwenkarm für die Verlagerung der Stückgüter auf der runden Plattform vorgesehen. Da der dritte Schwenkarm insbesondere kollinear zu dem zweiten Schwenkarm verfahrbar ist, können die Stückgüter beliebig von dem ersten bis zu dem dritten Schwenkarm übergeben und weiter verfahren werden. Der kollineare Aufbau beschleunigt die Verfahrenszeiten der einzelnen Stückgüter, da die einzelnen von den Armen zu verfahrenen Wege kurz gehalten werden und auch eine gleichzeitige Verlagerung von mehreren Stückgütern mit den drei Armen möglich ist.
Die schwenkbaren Arme können auch in jedem beliebigen Winkel zueinander angeordnet werden und verfahrbar sein.

In einer weiteren Ausführungsform der Erfindung kann eine Kippstation z.B. funktionell vor oder nach dem drehbaren Aufnahmebereich angeordnet sein. Der Vorteil einer Integration dieser Kippstation in die Vereinzelungsvorrichtung besteht darin, dass eine weitere Möglichkeit für die Änderung der Lage und Orientierung der Stückgüter gegeben ist. Sollte es für die Einlagerung eines Stückguts als sinnvoll erachtet werden, die Orientierung zu verändern, kann die Kippstation eingesetzt werden.

Vorteilhafterweise ist die Kippstation höhenverstellbar, so dass sie zwischen der Arbeitshöhe einer vorgelagerten Vorrichtungsbaugruppe, wie z.B. dem drehbaren Aufnahmebereich, und einer nachgelagerten Vorrichtungsbaugruppe, wie z.B. einer Einlagerungsstation, verfahren werden kann. Dies stellt einen besonderen Vorteil in der Kombination einer platzsparenden Anordnung und einer ergonomischen Einlagerungsposition dar. Insbesondere wenn die Kippstation zwei schwenkbare Flächen sowie eine fixierte horizontale Fläche aufweist, kommt der besondere Nutzen der Kippstation zur Geltung. So ermöglichen die zwei schwenkbaren Flächen eine Änderung der Lage der Stückgüter, indem die beiden Flächen jeweils von einer waagerechten in einer senkrechten Stellung geschwenkt werden. Dadurch kann das darauf befindliche Stückgut jeweils um 90° gedreht werden. Vorzugsweise bestehen die Flächen der Kippstation aus einem Material mit geringem Reibungswiderstand, so dass die Stückgüter gute Gleiteigenschaften vorfinden. Die fixierte, horizontale Fläche dient als Aufnahmefläche für die Stückgüter, bevor diese die schwenkbaren Flächen erreichen. Wenn die Lage der Stückgüter vor der Einlagerung nicht mehr verändert werden muss, können die Stückgüter auf dieser horizontalen Fläche vor der nachfolgenden Einlagerungsbewegung zwischengelagert werden.

Vorteilhafterweise sind die beiden schwenkbaren Flächen parallel zu dem dritten schwenkbaren Arm miteinander verbunden. Der dritte schwenkbare Arm ist für die Verlagerung der Stückgüter auf der Kippstation verfahrbar. Die beiden schwenkbaren Flächen sind z.B. mit einem Scharnier verbunden.

Günstig ist, wenn die schwenkbaren Flächen jeweils um 90° zwischen einer waagerechten und einer vertikalen Stellung schwenkbar sind. Durch diese Bewegungen ist es möglich, die Stückgüter auch jeweils um 90° zu drehen. Vorzugsweise werden die Flächen der Kippstation mittels fluidbetätigter Zylinder, Elektromotoren oder anderen Antrieben verschwenkt.

In einer besonders vorteilhaften Ausführungsform der Erfindung kann eine Einlagerungsstation funktionell nach der Kippstation oder dem drehbaren Aufnahmebereich angeordnet sein, um auf diese Weise eine beschleunigte Einlagerung der vereinzelten Stückgüter zu gewährleisten.

Vorteilhafterweise kann die Kippstation auf die Höhe der Einlagerungsstation verfahren werden, um somit den Höhenunterschied von einer platzsparenden Anordnung auf eine ergonomische Arbeitshöhe zu überwinden. Ferner wird dadurch eine Ausleitung von Stückgütern aus dem Vereinzelungs- und Einlagerungsprozess ermöglicht, indem der dritte schwenkbare Arm die auf der Kippstation befindlichen Stückgüter über den Rand der Flächen der Kippstation hinausschiebt und diese nicht auf Grund der Höhendifferenz auf die Einlagerungsstation gelangen können, sondern über eine Rutsche aus der Vorrichtung heraus transportiert werden. Die Einlagerungsstation kann die Stückgüter nur aufnehmen, wenn die Kippstation auf die gleiche Höhe verfahren wurde.

Günstig ist es, wenn der dritte schwenkbare Arm für die Verlagerung der Stückgüter von dem drehbaren Aufnahmebereich über die Kippstation bis zu der Einlagerungsstation verfahrbar ist. Somit können zusätzliche kostenintensive Verlagerungsvorrichtungen vermieden werden.

Ein bevorzugtes Ausführungsbeispiel der vorliegenden Erfindung wird nun anhand der beigefügten Zeichnungen näher beschrieben. Im Einzelnen zeigen
- Fig. 1: eine Draufsicht der erfindungsgemäßen Vereinzelungsvorrichtung;
- Fig. 2: eine Vorderansicht der in Fig. 1 gezeigten Vorrichtung, in der in Fig. 1 mit II bezeichneten Ansichtsrichtung, und
- Fig. 3: eine Seitenansicht der in Fig. 1 gezeigten Vorrichtung in der dort mit III bezeichneten Ansichtsrichtung.

Gleiche Komponenten werden in den Zeichnungen durchgängig mit gleichen Bezugszeichen bezeichnet.

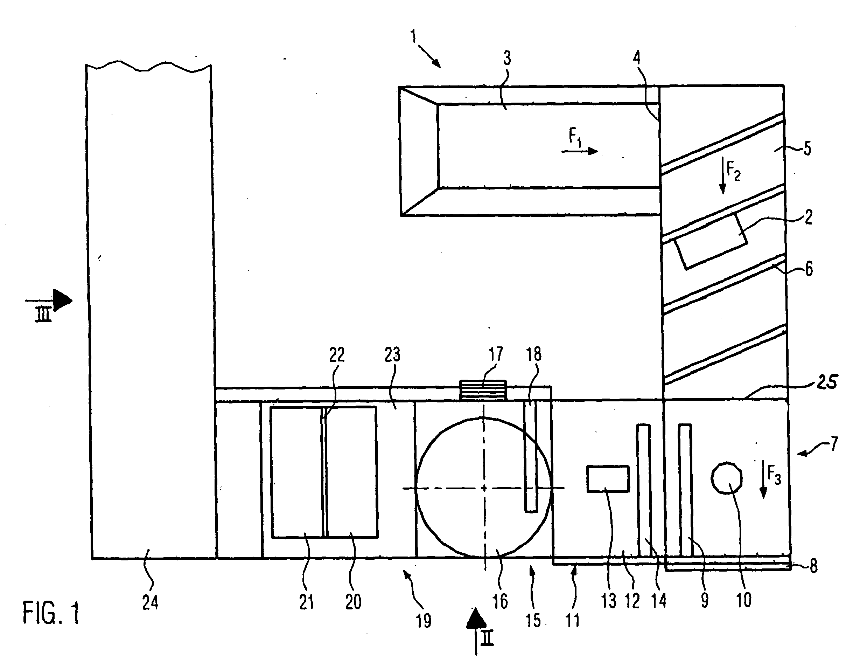

Fig. 1 zeigt eine Draufsicht einer erfindungsgemäßen Vorrichtung zum Vereinzeln im Wesentlichen quaderförmiger Stückgüter 2. Die Vorrichtung verfügt über eine Annahmestation 1, über welche die zu vereinzelnden und einzulagernden Stückgüter 2 in die Vorrichtung gelangen. Die Annahmestation 1 kann als Handeingabe, Rutsche oder Trichter ausgebildet sein. In dem Bereich der Annahmestation 1 befindet sich ein erster Förderer 3. Die Stückgüter gelangen über die Annahmestation 1 auf den Förderer 3. Der Förderer 3 ist ein Stetigförderer in der Form eines Förderbandes. Der Förderer 3 weist eine geneigte Förderebene oder eine horizontale Förderebene für den Transport der Stückgüter 2 auf. Diesem Förderer 3 können auch noch weitere Förderer funktionell nach geordnet werden. Die Förderrichtung F1 des Förderers 3 transportiert die Stückgüter 2 zu der nächsten Verarbeitungsposition der Vereinzelungsvorrichtung.

Dem ersten Förderer 3 ist ein zweiter Förderer 5 funktionell nachgeordnet. Die Stückgüter 2 werden mit dem Förderer 3 über die Endkante 4 des Förderers 3 transportiert. An dieser Endkante 4 befindet sich mindestens ein Sensor. Dieser Sensor ist beispielsweise eine Lichtschranke. Wenn ein Stückgut 2 an der Endkante 4 des ersten Förderers 3 in den Erfassungsbereich des Sensors tritt, wird die nachgelagerte Vorrichtungsbaugruppe 5 aktiviert und die Fördergeschwindigkeit des ersten Förderers 3 reduziert. Ein weiterer Sensor ist an der Endkante 4 des ersten Förderers 3 so angebracht, dass die über die Endkante 4 getretenen Stückgüter 2 in den Erfassungsbereich des zweiten Sensors gelangen. Mit dem zweiten Sensor wird sichergestellt, dass die von dem ersten Sensor noch auf dem Förderer 3 befindlichen Stückgüter 2 tatsächlich über die Endkante 4 des Förderers 3 transportiert wurden. Die Sensoren geben ihre Signale an eine Steuereinheit weiter.

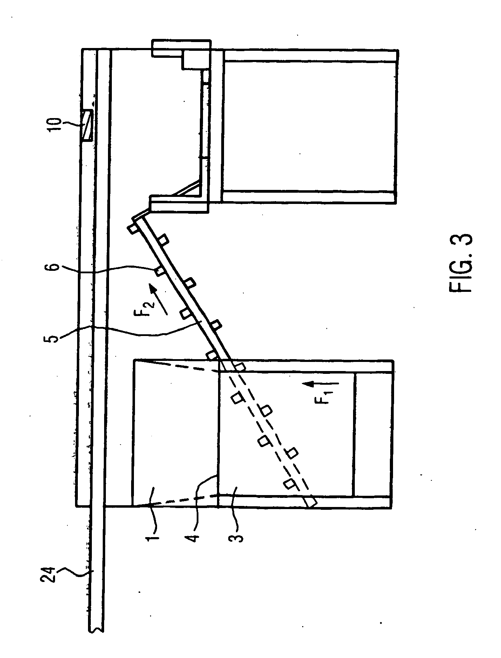

Der zweite Förderer 5 kann in jedem beliebigen Winkel zu dem ersten Förderer 3 aufgestellt werden. Vorzugsweise wird aus platzsparenden Gründen eine 90°-Anordnung vorgesehen. Der zweite Förderer 5 ist ein Stetigförderer mit einem Förderband und in Fig. 3 dargestellt. Die Förderrichtung F2 führt von der vorgelagerten Vorrichtungsbaugruppe 3 in Richtung der nachgelagerten Vorrichtungsbaugruppe 7. Der zweite Förderer 5 hat eine geneigte oder eine waagerechte Förderebene. Der zweite Förderer 5 weist Mitnehmer 6 in vorgegeben Abständen auf. Diese Mitnehmer 6 sind Rippen mit rechteckigem Querschnitt. Stückgüter 2 werden auf dem Förderband 5 mit Hilfe der Rippen 6 in der Förderrichtung F2 transportiert. In der Draufsicht (siehe Fig. 1) sind die Mitnehmer 6 schräg zur Förderrichtung F2 angeordnet. Wenn es die Dimensionen der Stückgüter erlauben, liegen mehrere Stückgüter nebeneinander auf dem Förderer 5 an dem Mitnehmer 6 an.

Die Stückgüter 2 werden von den Mitnehmern 6 des Förderers 5 über die Endkante 25 des zweiten Förderers 5 transportiert. An der Endkante 25 ist ein Sensor beispielsweise in Form einer Lichtschranke vorgesehen. Wenn ein Stückgut 2 in den Bereich des Sensors transportiert wird, gibt der Sensor eine Information an die Steuerungseinheit.

Ein dem ersten Förderer 3 oder dem zweiten Förderer 5 funktionell nachgeordnete Aufnahmebereich 7 weist ein Förderband auf. Die Förderrichtung F3 des horizontal angeordneten Förderbands verläuft kollinear zu der Förderrichtung F2 der vorgelagerten Vorrichtungsbaugruppe 5. Ein Anschlag 8 befindet sich an einer Endkante des Förderbands in Förderrichtung F3. Ein Sensor 10 erfasst den Aufnahmebereich 7. Der Sensor 10 ist oberhalb des Aufnahmebereichs 7 angeordnet. Ein schwenkbarer Arm 9 ist in dem Aufnahmebereich 7 verfahrbar. Um eine horizontale Schwenkachse kann der Arm 9 zwischen zwei Positionen verschwenkt werden. In der waagerechten Position des Arms 9 ist er parallel zu dem Aufnahmebereich 7 platziert. In der senkrechten Position steht der schwenkbare Arm 9 senkrecht auf der Förderrichtung F3.

Eine Identifizierungseinheit 11 ist dem Aufnahmebereich 7 funktionell nachgeordnet. Bevorzugt wird die Identifizierungseinheit 11 in einem Winkel von 90° zu der Förderrichtung F3 des Aufnahmebereichs 7 angeordnet. Die Identifizierungseinheit 11 weist eine horizontale Glasplatte 12 auf. Oberhalb und unterhalb der Identifizierungseinheit sind Sensoren 13 angebracht. Diese Sensoren 13 erfassen die Markierungen auf den Stückgütern 2, wie z.B. Strichcodes, und leiten sie an eine Steuereinheit weiter. Ein zweiter schwenkbarer Arm 14 ist in dem Aufnahmebereich der Identifizierungseinheit 11 verfahrbar. Der zweite schwenkbare Arm 14 ist wie der erste schwenkbare Arm 9 um eine horizontale Achse zwischen einer waagerechten und einer senkrechten Position drehbar. Der schwenkbare Arm 14 ist auch in dem Bereich der vorgelagerten Vorrichtungsbaugruppe 7 und der nachgelagerten Vorrichtungsbaugruppe 15 verfahrbar. Der erste schwenkbare Arm 9 ist auch in der Identifizierungseinheit 11 verfahrbar.

Ein drehbarer Aufnahmebereich 15 schließt sich an die Identifizierungseinheit 11 an. Die waagerechte Auflagefläche umfasst eine runde Plattform 16, die mittels eines Elektromotors oder eines anderen Antriebs um 360° drehbar ist. Die runde Plattform 16 ist aus Aluminium. Ein Sensor 17 ist in dem Bereich des drehbaren Aufnahmebereichs 15 so angebracht, dass er den Bereich der oberen Seite des drehbaren Aufnahmebereichs 15 erfasst. Der Sensor ist ein Strichcodeleser, der die Markierung auf den Stückgütern 2 liest und an eine Steuereinheit weiterleitet. Ein dritter schwenkbarer Arm 18 ist wie der erste schwenkbare 9 und der zweite schwenkbare Arm 14 um eine horizontale Achse zwischen einer waagerechten und einer senkrechten Position drehbar. In der waagerechten Position des Arms 18 ist er parallel zu der oberen Fläche der runden Plattform 16 verfahrbar. In der senkrechten Position steht der Schwenkarm 16 senkrecht auf der Fläche der Plattform 16. Der schwenkbare Arm 18 ist auch in dem Bereich der vorgelagerten Vorrichtungsbaugruppe und der nachgelagerten Vorrichtungsbaugruppe 19 verfahrbar. Die runde Plattform 16 kann auch höhenverstellbar sein.

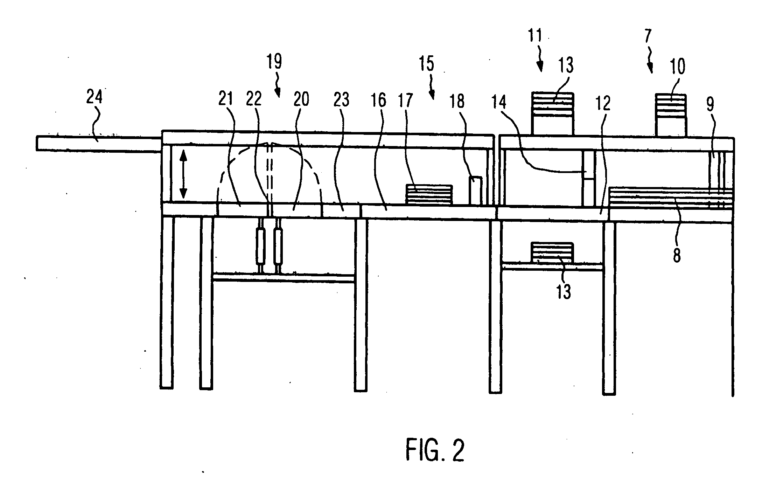

Fig. 2 zeigt eine Kippstation 19, welche funktionell nach dem drehbaren Aufnahmebereich 15 angeordnet oder in jeder beliebigen Lage innerhalb der Vereinzelungsvorrichtung einsetzbar ist. Die Kippstation 19 dient zum Kippen der Stückgüter und weist eine schwenkbare Fläche 20 und eine zweite schwenkbare Fläche 21 auf. Die beiden schwenkbaren Flächen 20, 21 sind mit einem Scharnier 22 drehbar verbunden. Eine fixierte horizontale Fläche 23 nimmt die schwenkbaren Flächen 20, 21 auf. Die horizontalen Oberflächen schließen bündig ab. Somit entsteht eine ebene Fläche. Die schwenkbare Fläche 20, 21 wird mittels eines pneumatischen, hydraulischen Zylinders oder eines Elektromotors zwischen einer horizontalen und einer vertikalen Position verschwenkt. Beide Flächen 20, 21 sind gleichzeitig schwenkbar. Sensoren erfassen die Stellung der schwenkbaren Flächen 20, 21 und geben die Signale an die Steuereinheit weiter. Die Kippstation 19 ist höhenverstellbar. Der Antrieb erfolgt beispielsweise über einen Elektromotor.

Die letzte Vorrichtungsbaugruppe 19 ist vor einer Einlagerungsstation 24 angeordnet. Die Einlagerungsstation 24 ist beispielsweise eine Zuführung für ein Hochregallager.

Der Betrieb der Vorrichtung zum Vereinzeln von Stückgütern 2 erfolgt beispielsweise folgendermaßen: Die zu vereinzelnden Stückgüter 2 werden manuell oder maschinell über die Annahmestation 1 auf den ersten Förderer 3 gebracht. Nachdem eine Sicherheitsklappe an der Öffnung der Annahmestation 1 geschlossen wurde und die Sensoren sowohl die Verriegelung der Klappe als auch in der Annahmestation 1 befindliche Stückgüter melden, wird der erste Förderer 3 in Richtung der Förderrichtung F1 gestartet. Durch die Bewegung fallen die Stückgüter übereinander und somit auch nacheinander auf das Förderband des Förderers 3. Sobald das erste Stückgut 2 an der Endkante 4 angelangt und von einem Sensor erfasst wird, wird die Fördergeschwindigkeit des Förderers 3 reduziert, bis das Stückgut 2 den Aufnahmebereich des Sensors verlassen hat. Nach diesem ersten Sensor ist ein zweiter Sensor angebracht, in dessen Aufnahmebereich das Stückgut dann gelangt. Der zweite Sensor ist so angebracht, dass nur ein von dem Förderer 3 herabfallendes Stückgut 2 in seinen Aufnahmebereich gelangen kann. Die Steuereinheit erhält dann das Signal, den zweiten Förderer 5 in Förderrichtung F2 zu starten.

Das von dem ersten Förderer 3 auf den zweiten Förderer 5 übergetretene Stückgut 2 kommt in einer beliebigen Orientierung auf einem schrägen Mitnehmer 6 zum Liegen. Da es auch möglich ist, dass über die Endkante 4 des ersten Förderers 3 mehrere Stückgüter 2 gleichzeitig auf den Förderer 5 übertreten, können auch mehrere Stückgüter 2 nebeneinander auf einem Mitnehmer 6 angeordnet sein. Sollten die Dimensionen der Stückgüter 2 zu groß sein, um nebeneinander an dem Mitnehmer 6 angeordnet zu sein, wird durch die Förderbewegung eines der Stückgüter 2 auf den nächsten Mitnehmer 6 fallen. Durch die schräge Anordnung der Mitnehmer 6 kann immer nur ein Stückgut 2 an der Endkante 25 des zweiten Förderers 5 ankommen. Ein Sensor überwacht den Bereich der Endkante 25. Wenn ein Stückgut 2 auf dem zweiten Förderer 5 über die Endkante 25 tritt, gibt der Sensor ein Signal an die Steuereinheit und das Förderband des Aufnahmebereichs 7 wird in der Förderrichtung F3 gestartet.

Das Stückgut 2 tritt über eine Rutsche in den Aufnahmebereich 7 und wird in Förderrichtung F3 gegen einen Anschlag 8 transportiert. Auf Grund der ununterbrochenen Förderbewegung wird das Stückgut 2 an dem Anschlag 8 ausgerichtet.

Ein Sensor 10 ist oberhalb des Aufnahmebereichs 7 angebracht und erfasst sowohl die Dimensionen des Stückguts als auch die Kennzeichnung, wie z.B. ein Strichcode und gibt die Informationen an die Steuereinheit weiter. Die Förderbewegung des Aufnahmebereichs 7 kann gestoppt werden, sobald das Stückgut 2 an dem Anschlag 8 ausgerichtet wurde. Dann wird ein schwenkbarer Arm 9 von seiner senkrechten Position in die waagerechte Position gedreht, so dass er das Stückgut 4 verschieben kann. Der schwenkbare Arm 9 verfährt bzw. verschiebt das Stückgut 2 seitlich in die Identifizierungseinheit 11.

In der Identifizierungseinheit 11 übernehmen Sensoren 13 die Erfassung der Kennzeichnungen wie z.B. Strichcodes auf den Stückgütern 2. Anschließend werden die Stückgüter 2 mit dem zweiten schwenkbaren Arm in den drehbaren Aufnahmebereich 16 verfahren. Dazu wird der drehbare Arm 14 von seiner senkrechten Position in die waagerechte Position gedreht, so dass er die Stückgüter 2 über die Glasplatte 12 der Identifizierungseinheit 11 verschieben kann.

Eine runde Plattform 16 des drehbaren Aufnahmebereichs 15 dient zur Drehung der Stückgüter 2, damit ein zuvor nicht erkannter Strichcode an der Seitenfläche eines Stückgutes 2 erfasst werden kann. Anschließend wird ein schwenkbarer Arm 18 von seiner senkrechten Position in die waagerechte Position gedreht, und er verschiebt das Stückgut 2 von dem drehbaren Aufnahmebereich 15 auf die Kippstation 19. Die Funktion des drehbaren Aufnahmebereichs 15 kann auch übersprungen werden, wenn der Strichcode auf dem Stückgut 2 bereits in dem Aufnahmebereich 7 oder der Identifizierungseinheit 11 erkannt wurde. In diesem Fall kann der schwenkbare Arm 18 das Stückgut 2 sofort auf die Kippstation 19 weiter verfahren.

Auf der Kippstation 19 können die Stückgüter 2 bei Bedarf über ihre Vorderkante gekippt werden, um eine optimale Orientierung zur Einlagerung in einem Lager, z.B. Hochregallager, zu erreichen. Des Weiteren können hier Stückgüter 2, die von einem der vorgelagerten Sensoren als fehlerhaft identifiziert wurden, aus dem Prozess heraus geführt werden. Dazu schiebt der schwenkbare Arm 18 das Stückgut 2 über die gesamte Kippstation 19, bis es an deren Ende über eine Rutsche aus der Vorrichtung herausgelangt.

Wird das Stückgut 2 korrekt erfasst und zur Einlagerung freigegeben, kann es noch durch Schwenken der beiden Flächen 20, 21 beliebig gekippt werden. Die Kippstation 19 wird dann auf die Höhe der Einlagerungsstation 24 verfahren. Der schwenkbare Arm 18 schiebt nun das Stückgut 2 über die Flächen der Kippstation 19 auf die Einlagerungsstation 24. Hier beginnt ein spezifischer Einlagerungsvorgang z.B. in ein Hochregallager.

Ausgehend von dem dargestellten Ausführungsbeispiel kann die Erfindung in vielfacher Weise abgewandelt werden. Beispielsweise können mehrere Förderer beliebig zueinander angeordnet sein. Die Verschiebung der Stückgüter 2 durch die schwenkbaren Arme 9, 14, 18 kann auch durch Hubbewegungen mittels Sauggreifern erfolgen.
Die Baugruppen der Vereinzelungsvorrichtung können auch unabhängig voneinander zur Vereinzelung und/oder Einlagerung eingesetzt werden.

## Patentansprüche

1. Vorrichtung zum Vereinzeln im wesentlichen quaderförmiger Stückgüter (2)
mit einer Annahmestation (1), in welcher mindestens ein Förderer (3) derart angeordnet ist, dass auf dem Förderer (3) ein Annahmevolumen zur Annahme zu vereinzelnder Stückgüter (2) gebildet ist und dass ein oder mehrere Stückgüter (2) entlang einer Ebene des Förderers (3) über eine in der Ebene liegende Endkante (4) des Förderers (3) hinaus transportierbar sind,
wobei ein zweiter Förderer (5) dem ersten Förderer (3) funktionell nachgeordnet ist und die Förderrichtung (F2) des zweiten Förderers (5) in einem Winkel zu der Förderrichtung (F1) des ersten Förderers (3) verläufl, **dadurch gekennzeichnet,**
**dass** der zweite Förderer (5) schräg zu seiner Förderrichtung (F2) angeordnete Mitnehmer (6) aufweist, mittels denen die Stückgüter (2) einzeln über die Endkante (25) des zweiten Förderers (5) transportierbar sind.

2. Vorrichtung nach Anspruch 1, **dadurch gekennzeichnet, dass** die Mitnehmer (6) in einem Winkel zwischen 20° und 70° und bevorzugt in einem Winkel von etwa 30° zur Förderrichtung (F2) des zweiten Förderers (5) angeordnet sind.

3. Vorrichtung nach einem der vorangehenden Ansprüche, **dadurch gekennzeichnet, dass** der zweite Förderer (5) eine Höhendifferenz zu dem ersten Förderer (3) aufweist.

4. Vorrichtung nach einem der vorangehenden Ansprüche, **dadurch gekennzeichnet, dass** zwischen dem ersten Förderer (3) und dem zweiten Förderer (5) wenigstens ein weiterer Förderer funktionell eingefügt ist.

5. Vorrichtung nach einem der vorangehenden Ansprüche, **dadurch gekennzeichnet, dass** die Förderrichtung (F2) des zweiten Förderers (5) in einem Winkel von 0° bis 150° und bevorzugt in einem Winkel von etwa 90° zu der Förderrichtung (F1) des ersten Förderers (3) angeordnet ist.

6. Vorrichtung nach einem der vorangehenden Ansprüche, **dadurch gekennzeichnet, dass** ein Aufnahmebereich (7) für die vereinzelten Stückgüter (2) funktionell nach dem zweiten Förderer (5) angeordnet ist.

7. Vorrichtung nach Anspruch 6, **dadurch gekennzeichnet, dass** der Aufnahmebereich (7) ein Förderband umfasst und die Förderrichtung (F3) des Förderbands kollinear zu der Förderrichtung (F2) des zweiten Förderers (5) ausgerichtet ist.

8. Vorrichtung nach einem der Ansprüche 6 bis 7, **dadurch gekennzeichnet, dass** ein erster schwenkbarer Arm (9) senkrecht zur Förderrichtung (F3) des Förderbands des Aufnahmebereichs verfahrbar ist.

9. Vorrichtung nach einem der Ansprüche 6 bis 8, **dadurch gekennzeichnet, dass** ein Sensor (10) den Aufnahmebereich (7) des Förderbands erfasst und der Sensor (10) insbesondere eine Kamera zur Vermessung der Stückgüter ist.

10. Vorrichtung nach einem der Ansprüche 6 bis 9, **dadurch gekennzeichnet, dass** eine Identifizierungseinheit (11) für die Identifizierung der Stückgüter (2) funktionell nach dem Aufnahmebereich (7) angeordnet ist, wobei die Identifizierungseinheit (11) in einem Winkel von 30° bis 150° und bevorzugt in einem Winkel von 90° zu der Förderrichtung (F3) des Aufnahmebereichs (7) angeordnet ist.

11. Vorrichtung nach Anspruch 10, **dadurch gekennzeichnet, dass** die Identifizierungseinheit (11) eine ebene Glasplatte (12) aufweist, die mit dem Aufnahmebereich (7) in etwa höhengleich angeordnet ist.

12. Vorrichtung nach einem der Ansprüche 10 oder 11, **dadurch gekennzeichnet, dass** mindestens ein Sensor (13) im Bereich der Identifizierungseinheit (11) vorgesehen ist, wobei der Sensor (13) bevorzugt ein optischer Sensor zur Erfassung eines auf den Stückgütern (2) aufgebrachten Strichcodes ist.

13. Vorrichtung nach einem der Ansprüche 11 oder 12, **dadurch gekennzeichnet, dass** ein zweiter schwenkbarer Arm (14) für die Verlagerung der Stückgüter (2) auf der Glasplatte (12) vorgesehen ist, wobei der zweite schwenkbare Arm (14) insbesondere kollinear zu dem ersten schwenkbaren Arm (9) verfahrbar ist.

14. Vorrichtung nach einem der Ansprüche 10 bis 13, **dadurch gekennzeichnet, dass** ein drehbarer Aufnahmebereich (15) funktionell nach der Identifizierungseinheit (11) angeordnet ist.

15. Vorrichtung nach Anspruch 14, **dadurch gekennzeichnet, dass** der drehbare Aufnahmebereich (15) eine runde Plattform (16) aufweist, die insbesondere aus Aluminium besteht.

16. Vorrichtung nach Anspruch 15, **dadurch gekennzeichnet, dass** ein dritter schwenkbare Arm (18) für die Verlagerung der Stückgüter (2) auf der runden Plattform (16) vorgesehen ist, wobei der dritte schwenkbare Arm (18) insbesondere kollinear zu dem zweiten schwenkbaren Arm (14) verfahrbar ist.

17. Vorrichtung nach einem der Ansprüche 14 bis 16, **dadurch gekennzeichnet, dass** eine Kippstation (19) funktionell nach dem drehbaren Aufnahmebereich (15) angeordnet ist.

18. Vorrichtung nach Anspruch 17, **dadurch gekennzeichnet, dass** die Kippstation (19) höhenverstellbar ist und insbesondere zwei schwenkbare Flächen (20,21) sowie eine fixierte horizontale Fläche (23) aufweist.

19. Vorrichtung nach Anspruch 18, **dadurch gekennzeichnet, dass** die schwenkbaren Flächen (20,21) parallel zu dem dritten schwenkbaren Arm (18) miteinander verbunden sind, welcher für die Verlagerung der Stückgüter (2) auf der Kippstation (19) verfahrbar ist.

20. Vorrichtung nach einem der Ansprüche 18 oder 19, **dadurch gekennzeichnet, dass** die schwenkbaren Flächen (20,21) jeweils um 90° zwischen einer waagerechten und einer vertikalen Stellung schwenkbar sind.

21. Vorrichtung nach einem der Ansprüche 17 bis 20, **dadurch gekennzeichnet, dass** eine Einlagerungsstation (24) funktionell nach der Kippstation (19) angeordnet ist.

22. Vorrichtung nach Anspruch 21, **dadurch gekennzeichnet, dass** die Kippstation (19) auf die Arbeitshöhe der Einlagerungsstation (24) verfahrbar ist.

23. Vorrichtung nach einem der Ansprüche 21 oder 22, **dadurch gekennzeichnet, dass** der dritte schwenkbare Arm (18) für die Verlagerung der Stückgüter (2) bis zu der Einlagerungsstation (24) verfahrbar ist.

## Claims

1. Device for individually separating substantially cuboidal piece goods (2) having a receiving station (1), in which at least one conveyor (3) is arranged in such a manner that a receiving space for receiving piece goods (2) to be individually separated is formed on the conveyor (3) and one or more piece goods (2) can be transported along a plane of the conveyor (3) beyond an end edge (4) of the conveyor (3) located in the plane, a second conveyor (5) being arranged operationally downstream of the first conveyor (3) and the conveying direction (F2) of the second conveyor (5) extending at an angle relative to the conveying direction (F1) of the first conveyor (3), **characterised in that** the second conveyor (5) has carriers (6) which are arranged in an inclined manner relative to its conveying direction (F2) and by means of which the piece goods (2) can be individually transported over the end edge (25) of the second conveyor (5).

2. Device according to claim 1, **characterised in that** the carriers (6) are arranged at an angle of between 20° and 70° and preferably at an angle of approximately 30° relative to the conveying direction (F2) of the second conveyor (5).

3. Device according to any one of the preceding claims, **characterised in that** the second conveyor (5) has a height difference relative to the first conveyor (3).

4. Device according to any one of the preceding claims, **characterised in that** at least one additional conveyor is operationally inserted between the first conveyor (3) and the second conveyor (5).

5. Device according to any one of the preceding claims, **characterised in that** the conveying direction (F2) of the second conveyor (5) is arranged at an angle of from 0° to 150° and preferably at an angle of approximately 90° relative to the conveying direction (F1) of the first conveyor (3).

6. Device according to any one of the preceding claims, **characterised in that** a receiving region (7) for the individually separated piece goods (2) is arranged operationally downstream of the second conveyor (5).

7. Device according to claim 6, **characterised in that** the receiving region (7) comprises a conveyor belt and the conveying direction (F3) of the conveyor belt is orientated in a collinear manner relative to the conveying direction (F2) of the second conveyor (5).

8. Device according to either claim 6 or claim 7, **characterised in that** a first pivotable arm (9) can be moved perpendicularly relative to the conveying direction (F3) of the conveyor belt of the receiving region.

9. Device according to any one of claims 6 to 8, **characterised in that** a sensor (10) detects the receiving region (7) of the conveyor belt and the sensor (10) is in particular a camera for measuring the piece goods.

10. Device according to any one of claims 6 to 9, **characterised in that** an identification unit (11) for the identification of the piece goods (2) is arranged operationally downstream of the receiving region (7), the identification unit (11) being arranged at an angle of from 30° to 150° and preferably at an angle of 90° relative to the conveying direction (F3) of the receiving region (7).

11. Device according to claim 10, **characterised in that** the identification unit (11) has a planar glass plate (12) which is arranged substantially at the same height as the receiving region (7).

12. Device according to either claim 10 or claim 11, **characterised in that** at least one sensor (13) is provided in the region of the identification unit (11), the sensor (13) preferably being an optical sensor for detecting a bar code which is applied to the piece goods (2).

13. Device according to either claim 11 or claim 12, **characterised in that** there is provided a second pivotable arm (14) for transferring the piece goods (2) on the glass plate (12), the second pivotable arm (14) being able to be moved in particular in a collinear manner relative to the first pivotable arm (9).

14. Device according to any one of claims 10 to 13, **characterised in that** a rotatable receiving region (15) is arranged operationally downstream of the identification unit (11).

15. Device according to claim 14, **characterised in that** the rotatable receiving region (15) has a round platform (16) which comprises in particular aluminium.

16. Device according to claim 15, **characterised in that** a third pivotable arm (18) is provided for transferring the piece goods (2) on the round platform (16), the third pivotable arm (18) being able to be moved in particular in a collinear manner relative to the second pivotable arm (14).

17. Device according to any one of claims 14 to 16, **characterised in that** a tilting station (19) is arranged operationally downstream of the rotatable receiving region (15).

18. Device according to claim 17, **characterised in that** the tilting station (19) can be adjusted in terms of height and in particular has two pivotable faces (20, 21) and a fixed horizontal face (23).

19. Device according to claim 18, **characterised in that** the pivotable faces (20, 21) are connected to each other parallel with the third pivotable arm (18) which can be moved to transfer the piece goods (2) on the tilting station (19).

20. Device according to either claim 18 or claim 19, **characterised in that** the pivotable faces (20, 21) can each be pivoted through 90° between a horizontal and a vertical position.

21. Device according to any one of claims 17 to 20, **characterised in that** a storage station (24) is arranged operationally downstream of the tilting station (19).

22. Device according to claim 21, **characterised in that** the tilting station (19) can be moved to the operating height of the storage station (24).

23. Device according to either claim 21 or claim 22, **characterised in that** the third pivotable arm (18) can be moved to transfer the piece goods (2) as far as the storage station (24).

## Revendications

1. Dispositif pour séparer des marchandises globalement cuboïde (2), avec une station d'entrée (1) dans laquelle au moins un convoyeur (3) est disposé de telle sorte qu'un volume d'entrée destiné à recevoir des marchandises (2) à séparer soit formé sur le convoyeur (3) et qu'une ou plusieurs marchandises (2) puissent être transportées le long d'un plan du convoyeur (3) et franchir un bord d'extrémité (4) du convoyeur (3) situé dans ce plan,
un deuxième convoyeur (5) étant disposé en aval, fonctionnellement, du premier convoyeur (3) et le sens de transport (F2) du deuxième convoyeur (5) formant un angle avec le sens de transport (F1) du premier convoyeur (3),
**caractérisé en ce que** le deuxième convoyeur (5) présente des éléments d'entraînement (6) qui sont disposés en biais par rapport à son sens de transport (F2) et à l'aide desquels les marchandises (2) peuvent franchir individuellement le bord d'extrémité (25) du deuxième convoyeur (5).

2. Dispositif selon la revendication 1, **caractérisé en ce que** les éléments d'entraînement (6) sont disposés par rapport au sens de transport (F2) du deuxième convoyeur (5) suivant un angle situé entre 20° et 70° et de préférence suivant un angle d'environ 30°.

3. Dispositif selon l'une des revendications précédentes, **caractérisé en ce que** le deuxième convoyeur (5) présente une différence de hauteur par rapport au premier convoyeur (3).

4. Dispositif selon l'une des revendications précédentes, **caractérisé en ce qu'**au moins un convoyeur supplémentaire est inséré fonctionnellement entre le premier convoyeur (3) et le deuxième convoyeur (5).

5. Dispositif selon l'une des revendications précédentes, **caractérisé en ce que** le sens de transport (F2) du deuxième convoyeur (5) est disposé par rapport au sens de transport (F1) du premier convoyeur (3) suivant un angle de 0° à 150° et de préférence suivant un angle d'environ 90°.

6. Dispositif selon l'une des revendications précédentes, **caractérisé en ce qu'**une zone de réception (7) pour les marchandises (2) séparées est disposée en aval du deuxième convoyeur (5), fonctionnellement.

7. Dispositif selon la revendication 6, **caractérisé en ce que** la zone de réception (7) comprend un convoyeur à bande, et le sens de transport (F3) de ce convoyeur à bande est colinéaire par rapport au sens de transport (F2) du deuxième convoyeur (5).

8. Dispositif selon l'une des revendications 6 à 7, **caractérisé en ce qu'**un premier bras pivotant (9) est mobile perpendiculairement par rapport au sens de transport (F3) du convoyeur à bande de la zone de réception.

9. Dispositif selon l'une des revendications 6 à 8, **caractérisé en ce qu'**un capteur (10) détecte la zone de réception (7) du convoyeur à bande, et le capteur (10) est constitué en particulier par une caméra destinée à mesurer les marchandises.

10. Dispositif selon l'une des revendications 6 à 9, **caractérisé en ce qu'**une unité d'identification (11) pour l'identification des marchandises (2) est disposée en aval de la zone de réception (7), fonctionnellement, l'unité d'identification (11) étant disposée par rapport au sens de transport (F3) de la zone de réception (7) suivant un angle de 30° à 150° et de préférence suivant un angle de 90°.

11. Dispositif selon la revendication 10, **caractérisé en ce que** l'unité d'identification (11) comporte une plaque de verre plane (12) qui est disposée à peu près à la même hauteur que la zone de réception (7).

12. Dispositif selon l'une des revendications 10 ou 11, **caractérisé en ce qu'**au moins un capteur (13) est prévu dans la zone de l'unité d'identification (11), le capteur (13) étant constitué de préférence par un capteur optique destiné à détecter un code-barres appliqué sur les marchandises (2).

13. Dispositif selon l'une des revendications 11 ou 12, **caractérisé en ce qu'**un deuxième bras pivotant (14) est prévu pour déplacer les marchandises (2) sur la plaque de verre (12), le deuxième bras pivotant (14) étant mobile en particulier colinéairement par rapport au premier bras pivotant (9).

14. Dispositif selon l'une des revendications 10 à 13, **caractérisé en ce qu'**une zone de réception rotative (15) est disposée en aval de l'unité d'identification (11), fonctionnellement.

15. Dispositif selon la revendication 14, **caractérisé en ce que** la zone de réception rotative (15) présente une plate-forme ronde (16) qui est en particulier en aluminium.

16. Dispositif selon la revendication 15, **caractérisé en ce qu'**un troisième bras pivotant (18) est prévu pour déplacer les marchandises (2) sur la plate-forme ronde (16), le troisième bras pivotant (18) étant mobile en particulier colinéairement par rapport au deuxième bras pivotant (14).

17. Dispositif selon l'une des revendications 14 à 16, **caractérisé en ce qu'**une station de basculement (19) est disposée en aval de la zone de réception rotative (15), fonctionnellement.

18. Dispositif selon la revendication 17, **caractérisé en ce que** la station de basculement (19) est réglable en hauteur et présente en particulier deux surfaces pivotantes (20, 21) ainsi qu'une surface horizontale fixe (23).

19. Dispositif selon la revendication 18, **caractérisé en ce que** les surfaces pivotantes (20, 21) sont reliées entre elles parallèlement au troisième bras pivotant (18) qui est mobile pour déplacer les marchandises (2) sur la station de basculement (19).

20. Dispositif selon l'une des revendications 18 ou 19, **caractérisé en ce que** les surfaces pivotantes (20, 21) sont aptes à pivoter chacune de 90° entre une position horizontale et une position verticale.

21. Dispositif selon l'une des revendications 17 à 20, **caractérisé en ce qu'**une station de stockage (24) est disposée en aval de la station de basculement (19), fonctionnellement.

22. Dispositif selon la revendication 21, **caractérisé en ce que** la station de basculement (19) est apte à être amenée à la hauteur de travail de la station de stockage (24).

23. Dispositif selon l'une des revendications 21 ou 22, **caractérisé en ce que** le troisième bras pivotant (18) destiné à déplacer les marchandises (2) est apte à être amené jusqu'à la station de stockage (24).
